# EUROPEAN PATENT SPECIFICATION

(11) **EP 0 490 605 B1**
(45) Date of publication and mention of the grant of the patent: **17.04.1996**
(21) Application number: 91311412.0
(22) Date of filing: 09.12.1991
(51) Int. Cl.: G06K 7/10, G06K 7/14

(54) **Optical scanning apparatus for reading coded symbols**
Optischer Abtastapparat zum Lesen von verschlüsselten Symbolen
Appareil d'exploration optique pour lire les symboles codés

(30) Priority: 10.12.1990 US 625322
(43) Date of publication of application: 17.06.1992
(73) Proprietor: NCR INTERNATIONAL INC., Dayton, Ohio 45479 (US)
(72) Inventor: Bassett, Jonathan David, Ithaca, New York 14850 (US)
(74) Representative: Robinson, Robert George

(56) References cited:
- EP-A- 0 347 814
- EP-A- 0 425 274

## Description

The present invention relates to an optical scanning apparatus and more particularly to a portable coded symbol scanning apparatus which can be operated in a hand-held mode or a fixed hands-free mode.

In present-day merchandising point-of-sale operations, data pertaining to the purchase of a merchandise item is obtained by reading encoded indicia such as a bar code label printed on or attached to the merchandise item. In order to standardize the bar codes used in various point-of-sales checkout systems, the grocery industry has adopted a uniform product code (UPC) which is in the form of a bar code. Reading systems which have been constructed to read this type of bar code include hand-held wands which are moved across the bar code, and stationary optical scanning systems normally located within the cabinet structure of a checkout counter, in which the bar code is read when a purchased merchandise item is moved across a window constituting the scanning area of the counter, which movement is part of the process of loading the item into a baggage cart. Where the merchandise consists of soft materials such as clothing, hand-held scanners were found to be ineffective under certain circumstances. A need has arisen for a bar code scanning device that combines the advantages of both a hand-held, as well as a fixed, hands-free scanner. Such an arrangement is described in US-A-4,766,297 which discloses a scanning device that can be utilized in either a portable mode of operation or a stationary mode of operation. The scanning device includes a portable hand-held scanner and a fixture for receiving and supporting the scanner. The fixture includes a base portion and a head portion interconnected in a spaced apart relationship. When the hand-held scanner is attached to the fixture, it can be operated as a fixed, over-head scanning apparatus. The fixture further includes means for sensing the presence of an object between the head portion and the base portion for automatically initiating reading by the hand-held scanner. A disadvantage of this structure is that it must necessarily be of a non-compact nature since the distance between the components of the sensing arrangement must be such as to allow even bulky objects to pass there between.

EP-A-0425274, which constitutes prior art for novelty purposes only under Article 54(3)EPC, discloses a support unit and a detachably mountable hand held bar code scanner. The scanner can be used when mounted in the support unit because the support unit contains a reading window through which the light emitted by the scanner is transmitted. The scanner will be used in this mode when objects to be scanned are small and light and may be passed over the reading window by the user. The scanner can also be used when removed from the support unit, in order to scan heavy or large objects. The support structure further includes mirror means, and holding means for holding the scanner so that, in operation, scanning beams from the scanning device are reflected from the mirror means out of the support structure through the reading window. The reading window lies in the depth of field of the scanner when held in the support structure by the holding means.

It is an object of the present invention to provide a scanning apparatus in which the above disadvantage is alleviated.

Thus, according to the invention, there is provided an optical scanning apparatus for reading coded symbols, including a hand-held scanning device, and a support structure for supporting said scanning device when used in a hands-free mode, sensing means mounted in said hand-held scanning device for sensing the position of said device on said support structure and for causing said device to be operated in a first mode in response to sensing the position of said device on said support structure.

An advantage of the scanning apparatus of the invention is that the operating performance of the scanner may be enhanced by altering the parameters of scanning. The electronics associated with the operation of the hand-held scanner will observe the scanning mode of the scanner so as to initiate an operation thereof or to alter the parameters of scanning. Thus, for example, the level of intensity of the scanning light beams may be increased when the apparatus is used in a hand-held mode.

The invention will now be described by way of example with reference to the accompanying drawings wherein like reference numerals indicate like or corresponding parts throughout the several views and wherein:
Fig. 1 is a right side elevational view of a portable optical bar code scanning apparatus of the present invention with a portion of the housing member removed showing details of the mounting of a hand-held scanner within the scanning apparatus and the location of a magnet within the housing member and a magnetic sensor within the scanner;
Fig. 2 is a view similar to Fig. 1 showing the hand-held scanner removed from the housing member.
Fig. 3 is a block diagram of the operating system of the hand-held scanner.

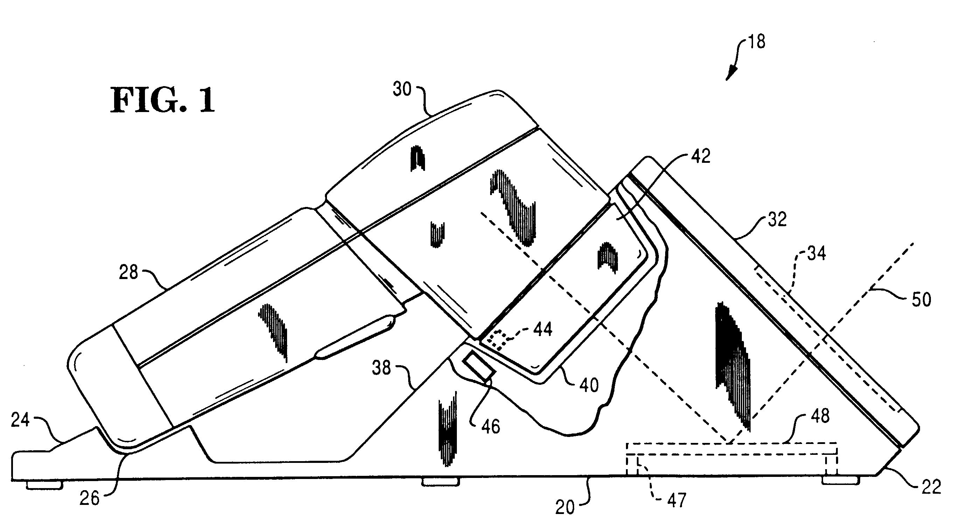

Referring now to Fig. 1, there is shown a side view of the bar code scanning apparatus of the present invention generally indicated by the numeral 18 which includes a housing member 20 comprising a front housing portion 22 and a rear portion 24 including a cutout portion 26 to accommodate the rear end portion 28 of a hand-held bar code optical scanner 30. The front housing portion 22 includes a sloping front surface 32 which includes a transparent plate 34 mounted therein on which is projected a scanning pattern (not shown).

The housing member 20 further includes a rear sloping surface 38 which includes a recessed portion 40 in which is positioned a head portion 42 of the optical scanner 30. Mounted in the head portion 42 is a magnetic sensor or switch 44 which may comprise a Hall sensor. An example of a Hall sensor that is commercially available is Part No. UGN-3040T/U manufactured by The Sprague Electric Co. of Concord, New Hampshire. Mounted in the front housing portion 22 adjacent the recessed portion 40 is a magnet 46. Mounted on a support member 47 secured to the floor of the housing member 20 is a mirror member 48 which reflects scanning light beams projected along the beam axis 50 by the hand-held scanner 30. The scanning light beams in the form of a scanning pattern (not shown) are reflected from the mirror member 48 to be focused on the surface of the transparent plate 34 enabling the operator to position the bar code label which is to be scanned adjacent the scanning pattern.

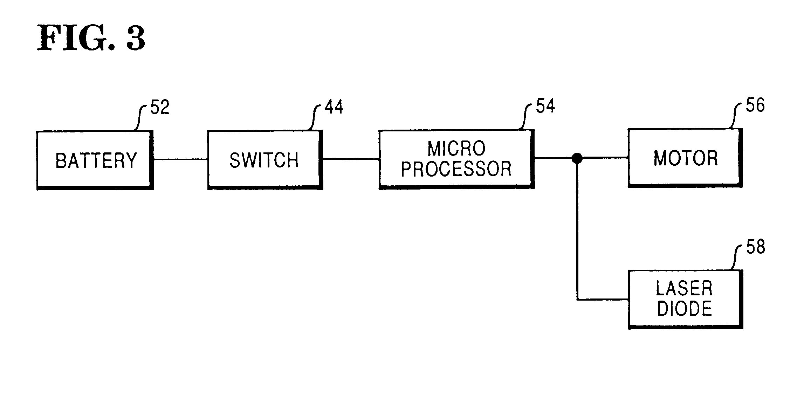

Referring to Fig. 3 there is shown a system block diagram of the hand-held scanner 30 which includes a battery 52, a microprocessor 54, the magnetic sensor or switch 44 coupled to the battery 52 and the microprocessor 54, a motor 56 coupled to the microprocessor 54, used in generating a plurality of scan lines in a manner that is well known in the art, and a laser diode 58 coupled to the microprocessor which generates the laser scanning light beams used in scanning the bar coded label.

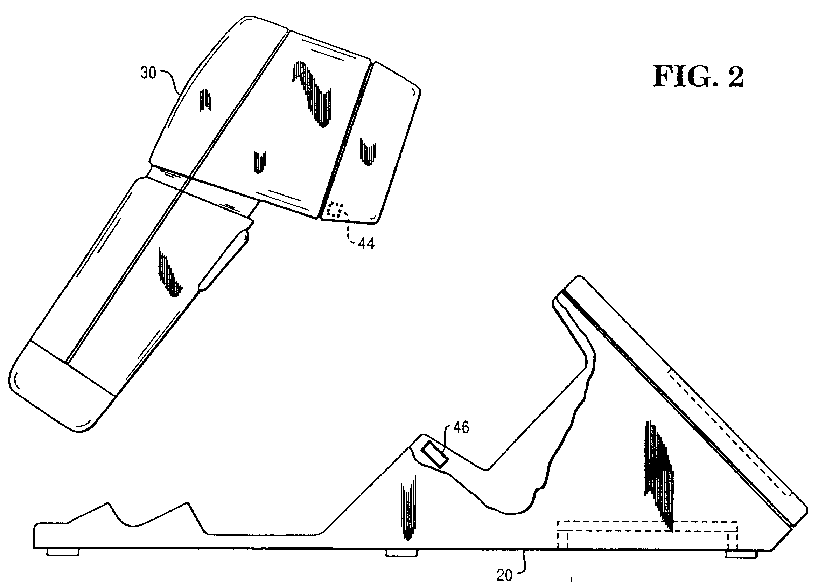

In the operation of the bar code scanning device 18 the operator will position the end portion 28 of the hand-held scanner 30 within the cutout portion 26 of the housing member 20. The operator will then insert the head portion 42 of the scanner 30 within the recessed portion 40 of the housing member, which movement positions the sensor 44 adjacent the magnet 46. In sensing the presence of the magnet 46, the sensor 44 will output a control signal to the microprocessor 54 which enables the microprocessor to alter several parameters to enhance the performance or usability of the scanner 30 when mounted in the housing member. This includes initiating the operation of the scanner by energizing the motor 56 and the laser diode 58. When the scanner 30 is removed from the housing member 20, the sensor 44 will generate a second control signal enabling the microprocessor 54 to control the scanner 30 for a normal hand-held scan operation. While a magnet has been disclosed as the source of sensing energy, it is obvious that other sources of sensing energy may be used. Thus element 46 (Fig. 2) may comprise a photodiode whose light output can be detected by a photodetector mounted in the scanner.

It may be seen that the present invention enables the microprocessor 54 (Fig. 3) to know the mode of operation of the hand-held scanner 30. Where the scanner is to be positioned on the housing member 20 during a scanning operation, the signals generated by the sensor member 44 enables the microprocessor to energize the motor 56 and the laser diode 58 for a hands-free scanning operation. When the scanner 30 is to be operated in a hand-held operation, the removal of the scanner from the housing member results in the sensor member generating signals notifying the microprocessor of this type of scanning operation which may operate the laser diode to increase the intensity of the scanning light beams.

## Claims

1. An optical scanning apparatus for reading coded symbols including a hand-held scanning device (30), and a support structure (20) for supporting said scanning device (30) when used in a hands-free mode, sensing means (44) mounted in said hand-held scanning device (30) for sensing the position of said device (30) on said support structure (20) and for causing said device (30) to be operated in a first mode in response to sensing the positioning of said device on said support structure (20).

2. An apparatus according to claim 1, characterized in that said sensing means (44) is arranged to generate a first control signal in response to sensing the positioning of said hand-held scanning device (30) on said support structure (20), and in that control means (54) are provided coupled to said sensing means (44) for controlling the operation of said hand-held scanning device (30) in said first mode in response to the generation of said first control signal, whereby the scanning light beams (50) are projected on to a coded label positioned adjacent a scanning surface (32) of said support structure (20).

3. An apparatus according to claim 2, characterized in that said sensing means (44) is arranged to generate a second control signal when said hand-held scanning device (30) is removed from said support structure (20), said control means (54) operating said hand-held scanning device (30) in a second mode of operation in response to the generation of said second control signal, wherein in said second mode of operation a coded label is scanned by manually moving said hand-held scanning device (30) across a coded label.

4. An apparatus according to any one of claims 1 to 3, characterized by operating means (46) mounted in said support structure (20) for bringing about operation of said sensing means (44) when positioned adjacent thereto.

5. An apparatus according to claim 4, characterized in that said operating means (46) is a magnet and said sensing means (44) is a magnetic sensor.

6. An apparatus to claim 4, characterized in that said operating means (46) is a light source and said sensing means is a photodetector.

7. An apparatus according to any one of the preceding claims characterised in that said hand-held scanning device (30) has a nose portion (42) and in that said support structure (20) has a recessed portion (40) shaped to accommodate said nose portion (42).

8. An apparatus according to claim 7, characterized in that said operating means (46) is mounted in said support structure (20) adjacent said recessed portion (40), and said sensing means (44) is mounted on said nose portion (42) of said hand-held scanning device (30).

9. An apparatus according to any one of the preceding claims, characterized in that said support structure (20) includes an exterior transparent plate (34), mirror means (48), and holding means for holding said hand-held scanning device (30) so that in operation scanning light beams from said device are reflected from said mirror means (48) out of said support structure (20) through said transparent plate (34), said transparent plate lying within the depth of field of said scanning device (30) when held by said holding means.

## Patentansprüche

1. Optischer Abtastapparat zum Lesen von verschlüsselten Symbolen, mit einer handgeführten Abtastvorrichtung (30) und einem Traggestell (20) zum Abstützen der Abtastvorrichtung (30) bei freihändigem Betrieb, einer in der handgeführten Abtastvorrichtung (30) montierten Abfühleinrichtung (44) zum Abfühlen der Position der Vorrichtung (30) auf dem Traggestell (20) und zum Veranlassen, daß die Vorrichtung (30) unter Ansprechen auf das Abfühlen der Positionierung der Vorrichtung auf dem Traggestell (20) in einem ersten Modus betätigt wird.

2. Apparat nach Anspruch 1, dadurch gekennzeichnet, daß die Abfühleinrichtung (44) angeordnet ist, um unter Ansprechen auf das Abfühlen der Positionierung der handgeführten Abtastvorrichtung (30) auf dem Traggestell (20) ein erstes Steuersignal zu erzeugen und daß eine an die Abfühleinrichtung (44) angeschlossene Steuereinrichtung (54) vorgesehen ist, um den Betrieb der handgeführten Abtastvorrichtung (30) in dem ersten Modus unter Ansprechen auf die Erzeugung des ersten Steuersignals zu steuern, wodurch die Abtastlichtstrahlen (50) auf ein verschlüsseltes Etikett projiziert werden, das angrenzend an eine Abtastfläche (32) des Traggestells (20) angeordnet ist.

3. Apparat nach Anspruch 2, dadurch gekennzeichnet, daß die Abfühleinrichtung (44) angeordnet ist, um ein zweites Steuersignal zu erzeugen, wenn die handgeführte Abtastvorrichtung (30) von dem Traggestell (20) entfernt wird, wobei die Steuereinrichtung (54) die handgeführte Abtastvorrichtung (30) unter Ansprechen auf die Erzeugung des zweiten Steuersignals in einer zweiten Betriebsart betätigt, wobei in der zweiten Betriebsart ein verschlüsseltes Etikett durch manuelles Bewegen der handgeführten Abtastvorrichtung (30) über ein verschlüsseltes Etikett abgetastet wird.

4. Apparat nach einem der Ansprüche 1 bis 3, gekennzeichnet durch eine in dem Traggestell (20) montierte Betätigungseinrichtung (46) zum Veranlassen des Betriebs der Abfühleinrichtung (44), wenn diese daran angrenzend positioniert ist.

5. Apparat nach Anspruch 4, dadurch gekennzeichnet, daß die Betätigungseinrichtung (46) ein Magnet ist und die Abfühleinrichtung (44) ein Magnetsensor ist.

6. Apparat nach Anspruch 4, dadurch gekennzeichnet, daß die Betätigungseinrichtung (46) eine Lichtquelle ist und die Abfühleinrichtung ein Photodetektor ist.

7. Apparat nach einem der vorhergehenden Ansprüche, dadurch gekennzeichnet, daß die handgeführte Abtastvorrichtung (30) einen vorspringenden Abschnitt (42) aufweist und das Traggestell (20) einen vertieften Abschnitt (40) aufweist, der zur Aufnahme des vorspringenden Abschnitts (42) ausgeformt ist.

8. Apparat nach Anspruch 7, dadurch gekennzeichnet, daß die Betätigungseinrichtung (46) angrenzend an den vertieften Abschnitt (40) in dem Traggestell (20) angebracht ist und die Abfühleinrichtung (44) auf dem vorspringenden Abschnitt (42) der handgeführten Abtastvorrichtung (30) angebracht ist.

9. Apparat nach einem der vorhergehenden Ansprüche, dadurch gekennzeichnet, daß das Traggestell (20) eine lichtdurchlässige Außenplatte (34), eine Spiegeleinrichtung (48) und Haltemittel zum Halten der handgeführten Abtastvorrichtung (30) aufweist, so daß im Betrieb von der Vorrichtung ausgehende Abtastlichtstrahlen von der Spiegeleinrichtung (48) durch die lichtdurchlässige Platte (34) hindurch aus dem Traggestell (20) herausreflektiert werden, wobei die lichtdurchlässige Platte innerhalb der Schärfentiefe der Abtastvorrichtung (30) liegt, wenn diese durch die Haltemittel gehalten ist.

## Revendications

1. Un appareil de balayage optique pour lire les symboles codés, comportant un dispositif de balayage à main (30), et une structure de support (20) pour supporter ledit dispositif de balayage (30) lorsqu'il est utilisé dans un mode mains libres, un moyen de captage (44) monté dans ledit dispositif de balayage à main (30) pour capter la position dudit dispositif (30) sur ladite structure de support (20) et pour faire en sorte que ledit dispositif (30) soit utilisé dans un premier mode en réponse au captage du positionnement dudit dispositif sur ladite structure de support (20).

2. Un appareil conformément à la revendication 1, caractérisé en ce que ledit moyen de captage (44) est arrangé pour générer un premier signal de contrôle en réponse au captage du positionnement dudit dispositif de balayage à main (30) sur ladite structure de support (20), et en ce que le moyen de contrôle (54) est fourni accouplé audit moyen de captage (44) pour contrôler le fonctionnement dudit dispositif de balayage à main (30) dans ledit premier mode en réponse à la génération dudit premier signal de contrôle, par quoi les faisceaux lumineux de balayage (50) sont projetés sur une étiquette codée positionnée au droit d'une surface de balayage (32) de ladite structure de support (20).

3. Un appareil conformément à la revendication 2, caractérisé en ce que ledit moyen de captage (44) est arrangé pour générer un deuxième signal de contrôle lorsque ledit dispositif de balayage à main (30) est enlevé de ladite structure de support (20), ledit moyen de contrôle (54) actionnant ledit dispositif de balayage à main (30) dans un deuxième mode de fonctionnement en réponse à la génération dudit deuxième signal de contrôle, dans quoi, dans ledit deuxième mode de fonctionnement, une étiquette codée est balayée en déplaçant manuellement ledit dispositif de balayage à main (30) à travers une étiquette codée.

4. Un appareil conformément à l'une des revendications 1 à 3, caractérisé par un moyen d'actionnement (46) monté dans ladite structure de support (20) pour provoquer l'actionnement dudit moyen de captage (44) lorsqu'il est positionné au droit de ce dernier.

5. Un appareil conformément à la revendication 4, caractérisé en ce que ledit moyen d'actionnement (46) est un aimant et en ce que ledit moyen de captage (44) est un capteur magnétique.

6. Un appareil conformément à la revendication 4, caractérisé en ce que ledit moyen d'actionnement (46) est une source de lumière et en ce que ledit moyen de captage est un photodétecteur.

7. Un appareil conformément à l'une quelconque des revendications précédentes caractérisé en ce que ledit dispositif de balayage à main (30) a une partie nez (42) et en ce que ladite structure de support (20) a une partie en retrait (40) façonnée pour recevoir ladite partie nez (42).

8. Un appareil conformément à la revendication 7, caractérisé en ce que ledit moyen d'actionnement (46) est monté dans ladite structure de support (20) au droit de ladite partie en retrait (40), et en ce que ledit moyen de captage (44) est monté sur ladite partie nez (42) dudit dispositif de balayage à main (30).

9. Un appareil conformément à l'une quelconque des revendications précédentes caractérisé en ce que ladite structure de support (20) comporte une plaque transparente extérieure (34), un moyen miroir 48, et un moyen de maintien pour maintenir ledit dispositif de balayage à main (30) de sorte que, lors du fonctionnement, les faisceaux lumineux de balayage dudit dispositif sont réfléchis dudit moyen miroir 48 hors de ladite structure de support (20) à travers ladite plaque transparente (34), ladite plaque transparente étant située dans la profondeur de champ dudit dispositif de balayage (30) lorsqu'il est maintenu par ledit moyen de maintien.
